# EUROPÄISCHE PATENTSCHRIFT

(11) **EP 0 499 786 B1**
(45) Veröffentlichungstag und Bekanntmachung des Hinweises auf die Patenterteilung: **24.04.1996**
(21) Anmeldenummer: 92100536.9
(22) Anmeldetag: 14.01.1992
(51) Int. Cl.: B65G 9/00

(54) **Fördermittel**
Conveying means
Moyen convoyeur

(30) Priorität: 18.02.1991 DE 9101858 U
(43) Veröffentlichungstag der Anmeldung: 26.08.1992
(73) Patentinhaber: RSL LOGISTIK GMBH & CO, D-86899 Landsberg (DE)
(72) Erfinder: Dürr, Fritz, D-5632 Wermelskirchen (DE)
(74) Vertreter: Grünecker, Kinkeldey, Stockmair & Schwanhäusser Anwaltssozietät

(56) Entgegenhaltungen:
- EP-A- 0 301 476
- DE-A- 1 925 635
- DE-A- 3 901 870
- FR-A- 1 442 900
- GB-A- 2 164 247

## Beschreibung

Die Erfindung bezieht sich auf ein Fördermittel der im Oberbegriff von Anspruch 1 erläuterten Art.

Ein derartiges Fördermittel ist aus der DE-A-1 925 635 bekannt. Aus dieser Druckschrift ist ein Fördermittel bekannt, das speziell zur Bearbeitung von Hosenteilen ausgebildet ist. Das Fördermittel enthält eine Klammer in Form zweier Klemmstangen und weitere Stangen, die im Abstand über den Klemmstangen angeordnet sind und Ablageflächen bilden. Die zu bearbeitenden Hosen-Schnitteile werden im Bündel bevorzugt an ihrer Aufschlagseite in die Klammer geklemmt und mit der anderen, der Bundseite, über die Querstangen übergeschlagen. In diesem Zustand werden die Hosenteile dann an einen Nähplatz gefördert, wo die entsprechende Näherin die Hosenteile zurückschlägt und benäht, wobei jedes benähte Teil nach oben und zurück über eine der Querstangen geschlagen wird, so daß das darunterliegende Hosenteil zum Benähen freiliegt. Das bekannte Fördermittel ist somit speziell zur Verwendung in einem ganz bestimmten Arbeitsschritt beim Benähen von Hosenteilen ausgebildet. Mit dem bekannte Fördermittel könnte beispielsweise in der beschriebenen Weise nicht gearbeitet werden, wenn die Seitennähte von Hosenteilen geschlossen werden müssen oder wenn beispielsweise kürzere Rock- oder Jackenteile verarbeitet werden sollen.

Die EP-A-301 476 beschreibt ein Fördermittel in Form eines Kleiderbügels, das speziell für den Transport von fertigen Kleidungsstücken und ihre Übergabe an einen Faltautomaten ausgelegt ist. Um sicherzustellen, daß das Kleidungsstück im Faltautomaten problemlos vom Fördermittel abgenommen werden kann, sind die Flügel des Kleiderbügels nach unten klappbar, wobei diese Klappbewegung beim Einlauf in den Faltautomaten ausgelöst wird, so daß der Kleiderbügel ohne weiteres aus der Halsöffnung herausgezogen werden kann und ist somit auf einen ganz bestimmten Verwendungszweck maßgeschneidert.

Ein weiteres Fördermittel zeigt die DE-A-39 01 870. Auch dieses Fördermittel weist eine Klammer mit zwei relativ und parallel zueinander bewegbaren Stangen auf, zwischen die ein Stoffbündel oder dgl. geklemmt werden kann. Zusätzlich sind an der Tragstange Befestigungsmöglichkeiten zum Befestigen weiterer Klammern oder dgl. vorgesehen. Das bekannte Fördermittel ist speziell auf die Erfordernisse einer hängenden Verarbeitung von Stoffbündeln ausgelegt und nicht universell genug einsetzbar.

Der Erfindung liegt somit die Aufgabe zugrunde, ein leicht zu handhabendes und universell einsetzbares Fördermittel zu schaffen.

Die Aufgabe wird durch die kennzeichnenden Merkmale des Anspruchs 1 gelöst.

Durch die erfindungsgemäß zusätzlich zur Klammer vorgesehene Aufhängeeinrichtung in der Art eines Kleiderbügels, die in unterschiedliche Stellungen bewegbar ist, wird das Potential der Verwendungsmöglichkeiten des Fördermittels in verblüffender Weise erweitert.

Konstruktive Ausgestaltungen, durch die die Palette der Verwendungsmöglichkeiten noch weiter verbreitert wird, sind den Unteransprüchen 2 bis 16 zu entnehmen.

Ausführungsbeispiele der Erfindung werden nachfolgend anhand der Zeichnungen näher erläutert. Es zeigen:
**Figur 1** eine perspektivische Darstellung eines ersten Ausführungsbeispieles der Erfindung,
**Figur 2** einen Schnitt entlang der Linie II-II eines Fördermittels gemäß Figur 1 in geschlossenem Zustand,
**Figur 3** ein zweites Ausführungsbeispiel eines erfindungsgemäßen Fördermittels,
**Figur 4** einen Schnitt ähnlich Figur 2 durch das Ausführungsbeispiel in Figur 3,
**Figur 5** eine perspektivische Darstellung eines Teils des Ausführungsbeispieles aus Figur 3 für eine erste Verwendung,
**Figur 6** eine perspektivische Teildarstellung des Ausführungsbeispiels aus Figur 3 für eine weitere Verwendungsmöglichkeit, und
**Figur 7** eine perspektivische Teildarstellung des Ausführungsbeispiels aus Figur 3 für eine weitere Verwendungsmöglichkeit.

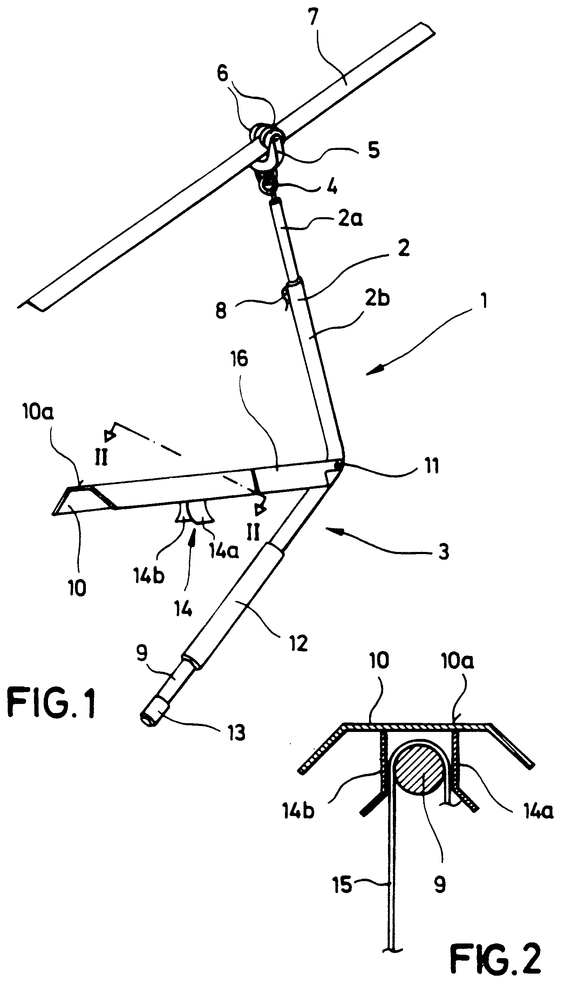

Aus Figur 1 ist ein erstes Ausführungsbeispiel eines Fördermittels 1 ersichtlich. Das Fördermittel 1 weist eine Tragstange 2 auf, an deren einem Ende eine Klammer 3 angeordnet ist. Das andere Ende der Tragstange 2 hängt über einem Gelenk 4 an einem Bügel 5, der seinerseits über Laufrollen 6 auf dachförmig angeordneten Laufflächen einer Schiene 7 abgehängt ist. Das Gelenk 4 erlaubt die freie Ausrichtung der Tragstange 2 in einer durch die Schwerkraft bedingten Lage sowie gegebenenfalls eine Relativdrehung zwischen der Tragstange 2 und dem Bügel 5 um eine senkrechte Achse. Die Tragstange 2 enthält ein Innenrohr 2a und ein Außenrohr 2b, die zum Verändern des Abstandes zwischen der Schiene 6 und der Klammer 3 stufenlos ineinander geschoben werden können. Eine Arretiereinrichtung in Form eines Exzenterhebels 8 dient dazu, die vorgewählte Stellung der beiden Rohre 2a, 2b zu fixieren.

Die Klammer 3 enthält eine mit der Tragstange 2 verbundene untere Stange 9 und eine als Hohlprofilstück mit einem trapezförmigen Querschnitt ausgebildete, obere Stange 10. Ein Ende der oberen Stange 10 ist mit einem Gelenk 11 verbunden, das nahe der Tragstange 2 und eines Endes der unteren Stange 9 auf dieser befestigt ist. Das Gelenk 11 erlaubt ein scherenartiges Aufklappen der oberen Stange 10 relativ zur unteren Stange 9 in einer im wesentlichen senkrechten Ebene. Die untere Stange 9 ist mit einem Stoffschutzbezug 12 und einem Haltgriff 13 versehen. Von der oberen Stange 10 ragen zwei Federzungen 14a und 14b einer Halteeinrichtung 14 nach unten vor, die in der in Figur 2 gezeichneten Weise die Relativlage zwischen der oberen Stange 10 und der unteren Stange 9 unter Zwischenklemmen eines Stoffbündels 15 fixieren. In dieser Stellung kann das Stoffbündel 15 sicher entlang der Schienen 7 gefördert und in dieser eingeklemmten Stellung auch bearbeitet werden. Dabei kann das Stoffbündel 15 durch Lösen des Exzenterhebels 8 und Aus- bzw. Einfahren der Rohre 2a, 2b der Tragstange 2 auf die für jeden Arbeitsplatz optimale Höhe gebracht werden. Die nach oben weisende Oberfläche des Halbprofilstückes 10 ist als Ablagefläche 10a für noch zu bearbeitende bzw. bereits bearbeitete Einzelteile des Stoffbündels 15 ausgebildet.

Außer der Klammer 3 ist am Fördermittel 1 eine Aufhängeeinrichtung 16 vorgesehen, die weiter unten noch näher erläutert wird.

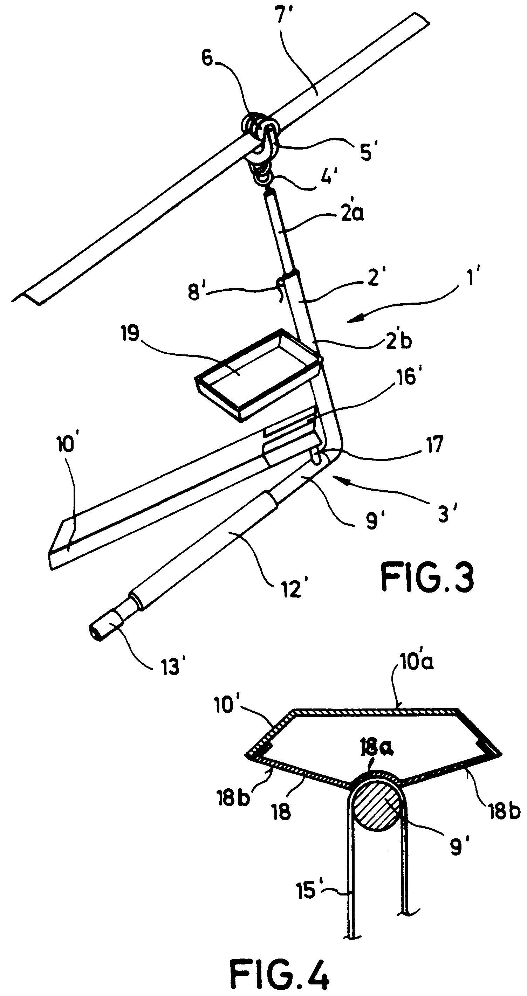

In den Figuren 2 und 3 ist ein weiteres Ausführungsbeispiel eines Fördermittels 1' gezeigt, wobei gleiche bzw. vergleichbare Bauteile mit den gleichen Bezugszeichen, ergänzt durch einen Hochstrich, bezeichnet und nicht nochmals erläutert sind. Statt des Gelenkes 11 enthält die Klammer 3' jedoch ein Drehgelenk 17, das ein scherenartiges Verdrehen der oberen Stange 10' zur unteren Stange 9' in einer im wesentlichen horizontalen Ebene erlaubt. An der der Unterseite der oberen Stange 10' ist eine Halteeinrichtung 18 in Form einer Blattfeder vorgesehen, die die Öffnungsweite des trapezförmigen Querschnitts der oberen Stange 10' überspannt. Etwa in der Mitte der Blattfeder 18 ist in diese eine Einbuchtung 18a eingearbeitet, deren Größe auf die Größe der unteren Stange 9' und des Stoffbündels 15' zumindest annähernd abgestimmt ist. Beidseitig der Einbuchtung 18a sind schrägverlaufende Auflaufflächen 18b vorgesehen, die beim Zusammenführen der oberen Stange 10' und der unteren Stange 9' gegen das Stoffbündel 15' bzw. die untere Stange 9' anschlagen und ein Auslenken der Blattfeder 18 in das innere des Profiles verursachen, so daß die Einbuchtung 18a in ihre korrekte Haltestellung springen kann.

An der Tragstange 2' des Fördermittels 1' ist weiterhin eine Aufnahmeschale 19 zur Aufnahme von Kleinteilen vorzugsweise lösbar befestigt. Die Befestigung kann durch Schrauben, Klemmen, Steckstifte oder andere, im Stand der Technik für derartige Zwecke bekannte Mittel erfolgen.

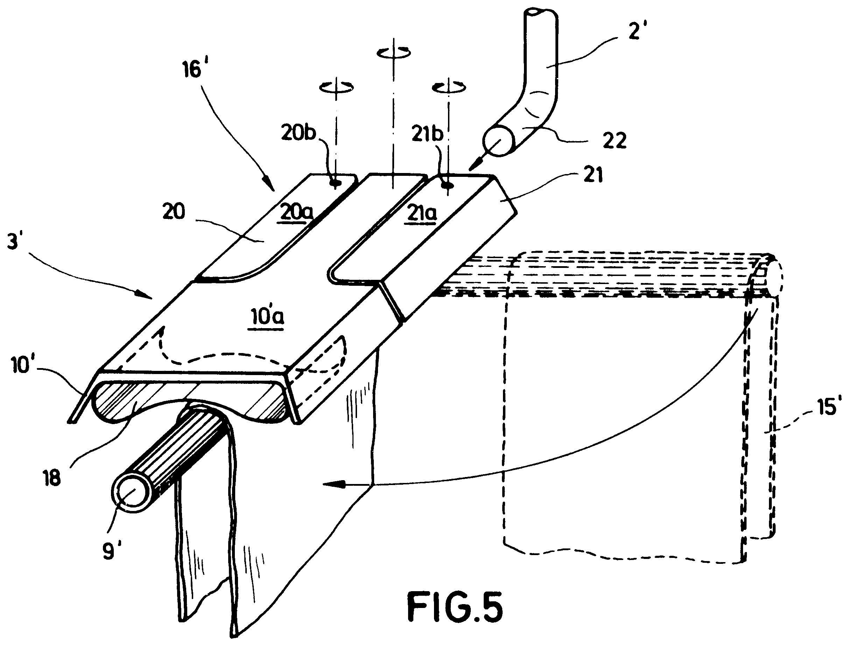

Auch das Fördermittel 1' enthält eine Aufhängeeinrichtung 16', deren Funktion und Konstruktion anhand der Figuren 5 bis 7 erläutert werden soll. Die Aufhängeeinrichtung 16' enthält zwei stangenartige Flügel 20 und 21, die jeweils durch Ausschneiden eines Teils des Profils der oberen Stange 10' von der der Tragstange 2' zugewandten Seite her gebildet wurden. Die Trennungsschnitte werden so geführt, daß an der oberen Stange 10' ein sich bis zu ihrem rückwärtigen Ende erstreckender, mittiger Steg mit der Auflagefläche 10'a verbleibt. Beidseitig dieses Steges ergänzen die Oberseiten 20a, 21a der beiden Flügel 20, 21 die Auflagefläche zur vollen Breite. Jeder der beiden Flügel ist über ein nur angedeutetes Gelenk 20b, 21b am der Tragstange 2' zugewandten Ende mit der oberen Stange 10' derart verbunden, daß die Flügel 20, 21 in horizontaler Richtung aus- und einklappbar sind.

Die Tragstange 2' ist mit einem Steckansatz 22 versehen, auf den die als Rohr ausgebildete untere Stange 9' mit der über das Gelenk 17 verbundenen oberen Stange 10' lösbar aufgesteckt werden kann.

In Figur 5 ist eine der möglichen Verwendungen der Klammer 3' zum Transport des Stoffbündels 15' gezeigt. Soll das Fördermittel 1' beladen werden, so wird zunächst entweder die obere Stange 10' von der unteren Stange 9' in waagerechte Richtung weggezogen, wobei die Tragstange 2' und die untere Stange 9' festgehalten werden, oder es wird die obere Stange 10' festgehalten und die untere Stange 9' verdreht, wobei sich die Tragstange 2' im Gelenk 4' mitdreht. Dann wird das Stoffbündel 15' auf die untere Stange 9' aufgelegt und die Klammer 3 wieder verschlossen.

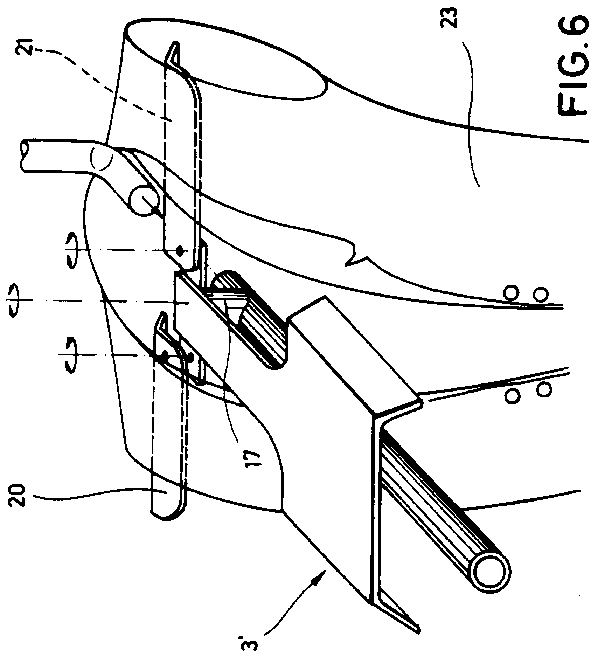

Figur 6 zeigt eine der Verwendungsmöglichkeiten der Aufhängeeinrichtung 16'. Bei dieser Verwendung sind beide Flügel 20 und 21 horizontal nach außen weggeklappt, wobei zweckmäßigerweise durch einen Anschlag (Hinterkante der Flügel) dafür gesorgt wird, daß sich beide Flügel in vollständig ausgeklapptem Zustand im wesentlichen rechtwinklig zu ihrer eingeklappten, fluchtend mit der oberen Stange 10' ausgerichteten Lage befindet. In dieser Stellung bilden beide Flügel 20, 21 eine Art Kleiderbügel, auf den halbfertige Kleidungsstücke 23, wie beispielsweise Sakkos, Jacken, Blusen und deren Futter aufgehängt werden können. Gleichzeitig steht jedoch die Klammer 3 für die in Figur 5 gezeichnete Verwendungsmöglichkeit zur Verfügung.

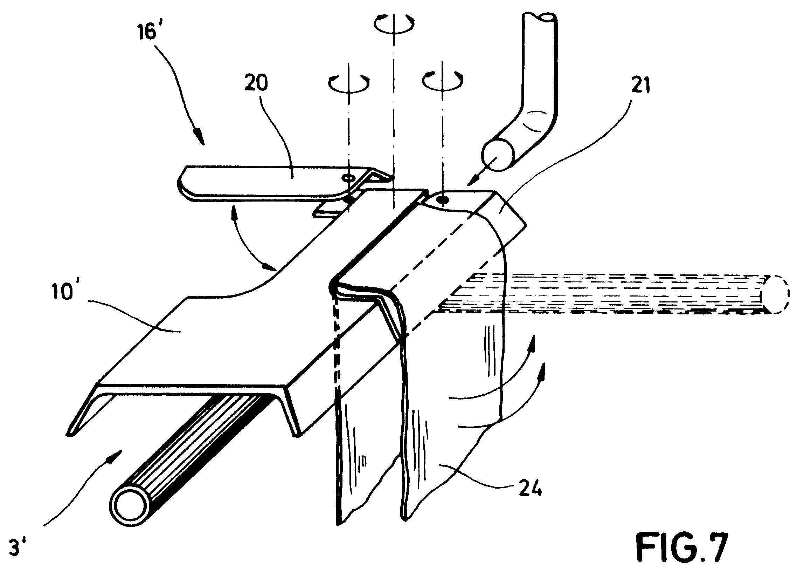

Figur 7 zeigt eine weitere Verwendungsmöglichkeit der Aufhängeeinrichtung 16'. Dabei werden die Flügel 20 bzw. 21 unabhängig voneinander bewegt und unabhängig voneinander zum Aufhängen von Gegenständen verwendet. In Figur 7 wurde über den Flügel 21 in seinem ausgeklappten Zustand ein Gegenstand 24 gehängt und dessen Lage auf dem Flügel 21 anschließend durch Einklappen des Flügels 21 fixiert, wobei der Flügel 21 mit der oberen Stange 10' eine weitere Klammer bildet, während die Klammer 3' wiederum für die in Figur 5 gezeichnete Verwendung zur Verfügung steht.

In Abwandlung der beschriebenen und gezeichneten Ausführungsbeispiele können die anhand der Figuren gezeigten Einzelheiten untereinander ausgetauscht werden. So kann anstelle der oberen Stange auch die untere Stange verschwenkbar sein. Auch die Klammer 3 der Figur 1 kann lösbar an der Tragstange 2 befestigt sein, so daß lediglich eine Tragstange auf Vorrat gehalten werden muß, die nach Bedarf mit der gewünschten Klammer versehen wird. Die Aufhängeeinrichtung kann nur ein einzige Stange enthalten, die in ihrer Mitte gelenkig am Fördermittel gelagert ist. Eine ein- oder zweiteilig ausgebildete Aufhängeeinrichtung kann weiterhin derart schwenkbar sein, daß sie in ihrer eingeklappten Stellung parallel zur Tragstange 2 verläuft und an ihr anliegt. Die Anordnung, konstruktive Ausgestaltung und Freiheitsgrade aller Gelenke können nach den Anforderungen variiert werden. So kann beispielsweise sowohl das Gelenk 11 als auch das Gelenk 17 an der Tragstange angeordnet sein. Die Gelenke für die Flügel der Aufhängeeinrichtung können Scharniere oder auch Kugelgelenke mit mehreren Freiheitsgraden sein.

Anstelle des Exzenterhebels können andere Arretiereinrichtungen, wie z. B. Rast- oder Klemmvorrichtungen, vorgesehen sein.

## Patentansprüche

1. Fördermittel (1, 1') zum hängenden Fördern von Gegenständen (15, 15'), insbesondere in der Bekleidungsindustrie, mit einer Tragstange (2, 2'), die sich über Laufrollen (6) auf einer Schiene (7, 7') abstützt und mit einer an der Tragstange (2, 2') angeordneten Klammer (3, 3') für die zu fördernden Gegenstände (15, 15') **dadurch gekennzeichnet,** daß zusätzlich zur Klammer (3, 3') eine Aufhängeeinrichtung (16, 16') in der Art eines Kleiderbügels vorgesehen ist, die über ein Gelenk (20b, 21b) aus- und einklappbar mit der Tragstange (2, 2') verbunden ist.

2. Fördermittel nach Anspruch 1, **dadurch gekennzeichnet,** daß die Klammer (3, 3') zwei übereinander angeordnete, scherenartig zueinander bewegbare, von der Tragstange (2, 2') vorstehende Stangen (9, 9', 10, 10') aufweist, zwischen denen eine Halteeinrichtung (14, 18) zum Festhalten der zu fördernden Gegenstände (15, 15') angeordnet ist.

3. Fördermittel nach Anspruch 1 oder 2, **dadurch gekennzeichnet,** daß die Aufhängeeinrichtung (16, 16') wenigstens ein stangenartiges Bauteil (20, 21) enthält, das im ausgeklappten Zustand im wesentlichen horizontal verläuft.

4. Fördermittel nach Anspruch 3, **dadurch gekennzeichnet,** daß das stangenartige Bauteil (20, 21) der Aufhängeeinrichtung (16, 16') in eingeklapptem Zustand fluchtend mit der Klammer (3, 3') ausgerichtet ist und mit dieser eine weitere Klemmeinrichtung bildet.

5. Fördermittel nach einem der Ansprüche 1 bis 4, **dadurch gekennzeichnet,** daß die Aufhängeeinrichtung (16, 16') zwei in entgegengesetzte Richtungen ausklappbare, stangenartige Bauteile (20, 21) aufweist.

6. Fördermittel nach einem der Ansprüche 1 bis 5, **dadurch gekennzeichnet,** daß eine nach oben weisende Oberfläche der Klammer (3, 3') als Auflagefläche (10a, 10'a) ausgebildet ist.

7. Fördermittel nach Anspruch 6, **dadurch gekennzeichnet,** daß die Aufhängeeinrichtung (16, 16') in ihrer eingeklappten Stellung einen Teil der Auflagefläche (10a, 10'a) bildet.

8. Fördermittel nach Anspruch 6 oder 7, **dadurch gekennzeichnet,** daß die Auflegefläche (10a, 10'a) auf der Oberseite eines die obere Stange (10, 10') der Klammer (3, 3') bildenden Hohlprofilstücks angeordnet ist.

9. Fördermittel nach Anspruch 8, **dadurch gekennzeichnet,** daß das Hohlprofilstück einen trapezförmigen Querschnitt aufweist.

10. Fördermittel nach Anspruch 8 oder 9, **dadurch gekennzeichnet,** daß die Aufhängeeinrichtung (16, 16') zwei als seitliche Ausschnitte aus dem Querschnitt des Hohlprofilstücks ausgebildete und in eingeklapptem Zustand fluchtend mit dem Hohlprofilstück ausgerichtete Flügel (20, 21) enthält.

11. Fördermittel nach einem der Ansprüche 2 bis 10, **dadurch gekennzeichnet,** daß die Stangen (9, 10) der Klammer (3) in einer senkrechten Ebene relativ zueinander bewegbar sind.

12. Fördermittel nach Anspruch 11, **dadurch** **gekennzeichnet,** daß die Halteeinrichtung (14) zwei im Abstand zueinander von der oberen in Richtung auf die untere Stange vorstehende, gebogene Federzungen (14a, 14b) enthält.

13. Fördermittel nach einem der Ansprüche 2 bis 10, **dadurch gekennzeichnet,** daß die Stangen (9', 10') in einer waagerechten Ebene relativ zueinander bewegbar sind.

14. Fördermittel nach Anspruch 13, **dadurch gekennzeichnet,** daß die Halteeinrichtung (18) eine sich in waagerechter Richtung erstreckende, mit einer Auflauffläche (18b) und einer Einbuchtung (18a) zur Aufnahme der unteren Stange (9') versehene Blattfeder enthält.

15. Fördermittel nach einem der Ansprüche 1 bis 14, **dadurch gekennzeichnet,** daß die Tragstange (2, 2') lösbar mit der Klammer (3, 3') verbunden ist.

16. Fördermittel nach einem der Ansprüche 1 bis 15, **dadurch gekennzeichnet,** daß an der Tragstange (2, 2') weitere Aufnahmeeinrichtungen (19) für zu fördernde Gegenstände anzuordnen sind.

## Claims

1. Conveyor means (1, 1') for the suspended conveying of articles (15, 15'), particularly in the clothing industry, with a carrier bar (2, 2') which is supported on a rail (7, 7') by rollers (6) and with a clasp (3, 3') for the articles (15, 15') to be conveyed arranged on the carrier bar (2, 2'), characterized in that, in addition to the clasp (3, 3'), a hanger device (16, 16'), similar to a coathanger, is provided, which can be extended from, and retracted to, the carrier bar (2, 2') by hinges (20b, 21b).

2. Conveyor means according to Claim 1, characterized in that the clasp (3, 3') comprises two bars (9, 9', 10, 10') projecting from the carrier bar (2, 2'), which are arranged one above the other and are movable relative to one another in scissors fashion, and between which a holder device (14, 18) for gripping the articles (15, 15') to be conveyed is arranged.

3. Conveyor means according to Claim 1 or 2, characterized in that the hanger device (16, 16') includes at least one bar-like component (20, 21) which extends essentially horizontally when in the extended position.

4. Conveyor means according to Claim 3, characterized in that the bar-like component (20, 21) of the hanger device (16, 16') is aligned flush with the clasp (3, 3'), forming a further clasp arrangement with the latter, when in the retracted position.

5. Conveyor means according to any one of Claims 1 to 4, characterized in that the hanger device (16, 16') comprises two bar-like components (20, 21) which are extensible in opposite directions.

6. Conveyor means according to any one of Claims 1 to 5, characterized in that an upwards facing surface of the clasp (3, 3') is formed as a bearing surface (10a, 10'a).

7. Conveyor means according to Claim 6, characterized in that the hanger device (16, 16') forms part of the bearing surface (10a, 10'a) when in its retracted position.

8. Conveyor means according to Claim 6 or 7, characterized in that the bearing surface (10a, 10'a) is located on the top of a hollow section forming the upper bar (10, 10') of the clasp (3, 3').

9. Conveyor means according to Claim 8, characterized in that the hollow section has a trapezoidal cross-section.

10. Conveyor means according to Claim 8 or 9, characterized in that the hanger device (16, 16') has two wings (20, 21) formed as lateral cutouts of the hollow section and aligned flush with the hollow section when in the retracted position.

11. Conveyor means according to any one of Claims 2 to 10, characterized in that the bars (9, 10) of the clasp (3) are movable relative to one another in a vertical plane.

12. Conveyor means according to Claim 11, characterized in that the holder device (14) has two curved springy tongues (14a, 14b), spaced apart from one another, projecting from the upper bar towards the lower bar.

13. Conveyor means according to any one of Claims 2 to 10, characterized in that the bars (9', 10') are movable relative to one another in a horizontal plane.

14. Conveyor means according to Claim 13, characterized in that the holder device (18) has a leaf spring extending horizontally, with a lead-in surface (18b) and a concavity (18a) to receive the lower bar (9').

15. Conveyor means according to any one of Claims 1 to 14, characterized in that the carrier bar (2, 2') is releasably connected to the clasp (3, 3').

16. Conveyor means according to any one of Claims 1 to 15, characterized in that further holder devices (19) for articles to be conveyed can be fitted to the carrier bar (2, 2').

## Revendications

1. Moyen convoyeur (1, 1') pour le transport suspendu d'objets (15, 15'), notamment dans l'industrie de l'habillement, comprenant une barre de support (2, 2') qui s'appuie sur un rail (7, 7') par l'intermédiaire de galets de roulement (6), et une pince (3, 3') pour les objets (15, 15') à transporter, montée sur la barre de support (2, 2'), **caractérisé en ce** qu'en supplément de la pince (3, 3'), un dispositif de suspension (16, 16') est prévu à la manière d'un cintre lequel est couplé de façon dépliable et repliable avec la barre de support (2, 2') par l'intermédiaire d'une articulation (20b, 21b).

2. Moyen convoyeur selon la revendication 1, caractérisé en ce que la pince (3, 3') comporte deux barres (9, 9', 10, 10') disposées l'une au-dessus de l'autre à la manière de ciseaux et dépassant de la barre de support (2, 2'), entre lesquelles est placé un dispositif de retenue (14, 18) pour la retenue des objets (15, 15') à transporter.

3. Moyen convoyeur selon l'une des revendications 1 ou 2, caractérisé en ce que le dispositif de suspension (16, 16') comprend au moins un élément (20, 21) en forme de barre qui, à l'état déplié, est orienté sensiblement dans le sens horizontal.

4. Moyen convoyeur selon la revendication 3, caractérisé en ce que, à l'état replié, l'élément (20, 21) en forme de barre du dispositif de suspension (16, 16') est aligné avec la pince (3, 3') et forme avec celle-ci un dispositif de serrage supplémentaire.

5. Moyen convoyeur selon l'une des revendications 1 à 4, caractérisé en ce que le dispositif de suspension (16, 16') comprend deux éléments (20, 21) en forme de barres dépliables dans des directions opposées.

6. Moyen convoyeur selon l'une des revendications 1 à 5, caractérisé en ce qu'une surface de la pince (3, 3') dirigée vers le haut est conformée en surface d'appui (10a, 10'a).

7. Moyen convoyeur selon la revendication 6, caractérisé en ce que le dispositif de suspension (16, 16') forme dans sa position repliée une partie de la surface d'appui (10a, 10'a).

8. Moyen convoyeur selon l'une des revendications 6 ou 7, caractérisé en ce que la surface d'appui (10a, 10'a) est disposée sur la surface supérieure d'un profil creux qui forme la barre supérieure (10, 10') de la pince (3, 3').

9. Moyen convoyeur selon la revendication 8, caractérisé en ce que l'élément profilé creux présente une section transversale de forme trapézoïdale.

10. Moyen convoyeur selon l'une des revendications 8 ou 9, caractérisé en ce que le dispositif de suspension (16, 16') comprend deux ailes (20, 21) qui sont réalisées sous la forme de découpures latérales de la section transversale de l'élément profilé creux et alignées, à l'état replié, avec l'élément profilé creux.

11. Moyen convoyeur selon l'une des revendications 2 à 10, caractérisé en ce que les barres (9, 10) de la pince (3) peuvent être déplacées l'une par rapport à l'autre dans un plan vertical.

12. Moyen convoyeur selon la revendication 11, caractérisé en ce que le dispositif de retenue (14) comprend deux lames de ressort (14a, 14b) pliées qui dépassent, à distance l'une de l'autre, de la barre supérieure en direction de la barre inférieure.

13. Moyen convoyeur selon l'une des revendications 2 à 10, caractérisé en ce que les barres (9', 10') peuvent être déplacées l'une par rapport à l'autre dans un plan horizontal.

14. Moyen convoyeur selon la revendication 13, caractérisé en ce que le dispositif de retenue (18) comprend une lame de ressort orientée dans le sens horizontal et munie d'une surface de contact (18b) inclinée et d'un creux (18a) pour la réception de la barre inférieure (9').

15. Moyen convoyeur selon l'une des revendications 1 à 14, caractérisé en ce que la barre de support (2, 2') est couplée de manière amovible avec la pince (3, 3').

16. Moyen convoyeur selon l'une des revendications 1 à 15, caractérisé en ce que des dispositifs de réception (19) supplémentaires pour des objets à transporter peuvent être montés sur la barre de support (2, 2').
